Europäisches Patentamt

(19) European Patent Office

Office européen des brevets

(11) Publication number: **0 261 058 B1**

## (12) EUROPEAN PATENT SPECIFICATION

(45) Date of publication of patent specification: **13.05.92**

(51) Int. Cl.5: **C04B 35/65**, C04B 35/10, C04B 41/87

(21) Application number: **87630178.9**

(22) Date of filing: **03.09.87**

(54) **Self-supporting ceramic sructures and methods of making the same.**

(30) Priority: **16.09.86 US 907923**

(43) Date of publication of application:
**23.03.88 Bulletin 88/12**

(45) Publication of the grant of the patent:
**13.05.92 Bulletin 92/20**

(84) Designated Contracting States:
**AT BE CH DE ES FR GB GR IT LI LU NL SE**

(56) References cited:
**EP-A- 0 193 292**

(73) Proprietor: **LANXIDE TECHNOLOGY COM-
PANY, LP.
Tralee Industrial Park
Newark Delaware 19711(US)**

(72) Inventor: **Newkirk, Marc S.
38 Ouartz Mill Road
Newark Delaware 19711(US)**
Inventor: **Weinstein, Jerry
321 Laurel Avenue
Newark Delaware 19711(US)**

(74) Representative: **Andrae, Steffen, Dr. et al
DENNEMEYER & ASSOCIATES Balanstrasse
55
W-8000 München 90(DE)**

## Description

The present invention relates generally to a method of modifying a self-supporting first ceramic body comprised of a first polycrystalline material having interconnected porosity by incorporating a second polycrystalline material into at least some of the porosity of the first ceramic body. More particularly, this invention relates to self-supporting ceramic structures formed as the oxidation reaction product of first and second parent metals. The invention also relates to methods for producing such ceramic structures.

The subject matter of this application is related to commonly owned EP-A-155 831. This application discloses the method of producing self-supporting ceramic bodies grown as the oxidation reaction product from a parent metal precursor. Molten parent metal is reacted with a vapor-phase oxidant to form an oxidation reaction product, and the metal migrates through the oxidation product toward the oxidant thereby continuously developing a polycrystalline ceramic body which can be produced having an interconnected, metallic component and/or interconnected porosity. The process may be enhanced by the use of an alloyed dopant, such as in the case of an aluminum parent metal oxidized in air. This method was improved by the use of external dopants applied to the surface of the precursor metal as disclosed in commonly owned EP-A-169 067.

The subject matter of this application is also related to that of commonly owned EP-A-193 292. This application discloses a novel method for producing self-supporting ceramic composites by growing an oxidation reaction product from a parent metal into a permeable mass of filler, thereby infiltrating the filler with a ceramic matrix.

Common to each of these Commonly Owned Patent Applications is the disclosure of embodiments of a ceramic body comprising an oxidation reaction product and, optionally, one or more nonoxidized constituents of the parent metal precursor, or voids, or both. The oxidation reaction product may exhibit interconnected porosity which may be a partial or nearly complete replacement of the metal phase. The interconnected porosity will largely depend on such factors as the temperature at which the oxidation reaction product is formed, the length of time at which the oxidation reaction is allowed to proceed, the composition of the parent metal, the presence of dopant materials, etc. Some of interconnected porosity is accessible from an external surface or surfaces of the ceramic body, or is rendered accessible by a post-process operation as by machining, cutting, grinding, fracturing, etc.

## SUMMARY OF THE INVENTION

In accordance with the present invention there is provided a method of producing a self-supporting ceramic structure, the method comprising the following steps. A first, self-supporting ceramic body is provided. This first ceramic body comprises a first polycrystalline oxidation reaction product formed upon oxidation of a first molten parent metal with a first oxidant, and interconnected porosity at least partially accessible from one or more surfaces of the ceramic body. A body of second parent metal and the first ceramic body are oriented relative to each other so that melting and oxidation reaction of the second parent metal with a second, vapor-phase oxidant will cause formation of a second polycrystalline oxidation reaction product in a direction towards and into the interconnected porosity of the first ceramic body. The second parent metal is heated to a temperature region above its melting point but below the melting points of both the first and second oxidation reaction products to form a body of molten second parent metal. Within that temperature region the body of molten second parent metal is reacted with the vapor-phase oxidant to form the second oxidation reaction product polycrystalline material. Still within that temperature at least a portion of the second oxidation reaction product is maintained in contact with and between the body of molten second parent metal and the oxidant, whereby second parent metal is drawn through the second polycrystalline material towards the oxidant so that second oxidation reaction product continues to form at the interface between the oxidant and previously formed second oxidation reaction product. Finally, the reaction is continued within the aforesaid temperature region for a time sufficient to infiltrate at least part of the porosity of the ceramic body with the second polycrystalline material.

One aspect of the invention includes making the first ceramic body by the following steps. A first parent metal is heated to form a body of molten parent metal which is reacted with a first oxidant at a temperature to form a first oxidation reaction product. The first oxidation reaction product is maintained in contact with, and extending between, the body of first molten parent metal and the oxidant, and the temperature is maintained to progressively draw molten metal through the first oxidation reaction product towards the oxidant so that the first oxidation reaction product continues to form at the interface between the oxidant and previously formed first oxidation reaction product. The reaction is continued in the process temperature range for a time sufficient to produce a first, self-supporting ceramic body comprised of a polycrystalline material comprising the first oxidation reaction product and having one or both of porosity and one or more metallic constituents. The improvement in this method comprises the following steps: (1) a selected degree of porosity is provided to the first polycrystalline material, either by suitably controlling the above-described conditions of making it, or by post-treatment (or both). After step (1), a second parent metal and the first polycrystalline material are oriented relative to each other so that formation of a second polycrystalline oxidation reaction product will occur in a direction towards and into the porosity of the first polycrystalline material. Then, the above-described steps to make the first ceramic body are repeated on the second parent metal and first polycrystalline material with a second, vapor-phase oxidant. This results in the formation of a second oxidation reaction product which is continued for a time sufficient so that the second oxidation reaction product infiltrates at least a portion of the porosity of the first polycrystalline material, thereby forming the ceramic structure.

In accordance with the present invention there is also provided a self-supporting ceramic structure which comprises the following. A first ceramic body comprised of a first polycrystalline oxidation reaction product formed upon oxidation of a first molten parent metal with an oxidant, and possessing interconnected porosity at least partially accessible from one or more surfaces of said ceramic body; and a second polycrystalline oxidation reaction product formed upon oxidation of a second molten parent metal with an oxidant, disposed in at least a portion of the aforesaid porosity.

As used in this specification and the appended claims, the terms below are defined as follows:

"Ceramic" is not to be unduly construed as being limited to a ceramic body in the classical sense, that is, in the sense that it consists entirely of non-metallic and inorganic materials, but rather refers to a body which is predominantly ceramic with respect to either composition or dominant properties, although the body contains minor or substantial amounts of one or more metallic constituents and/or porosity (interconnected and isolate) most typically within a range of from about 1-40% by volume, but the amount of metallic constituents may be higher.

"Oxidation reaction product" generally means one or more metals in any oxidized state wherein the metal has given up electrons to or shared electrons with another element, compound, or combination thereof. Accordingly, an "oxidation reaction product" under this definition includes the product of reaction of one or more metals with an oxidant such as those described herein.

"Oxidant" means one or more suitable electron acceptors or electron sharers and may be a solid, a liquid or a gas (vapor) or some combination of these (e.g., a solid and a gas) at the process conditions for ceramic growth.

"Parent metal" is intended to refer to relatively pure metals, commercially available metals with impurities and/or alloying constituents therein, and alloys and intermetallic compounds of the metals. When a specific metal is mentioned, the metal identified should be read with this definition in mind unless indicated otherwise by the context. For example, when aluminum is the parent metal, the aluminum may be relatively pure metal (e.g., commercially available aluminum of 99.7% purity), or 1100 aluminum having as nominal impurities of about 1% by weight silicon plus iron, or aluminum alloys such as, for example, 5052.

Brief Description of the Figures

FIGURE 1 is a schematic view of a ceramic body having interconnected porosity and interconnected metal.

FIGURE 1A is an enlarged view taken along lines A-A of FIGURE 1.

FIGURE 2 is a schematic, partially cross-sectional view of the ceramic body of FIGURE 1 after a substantial part of the interconnected metal has been removed.

FIGURE 3 is a schematic view of a ceramic body in an inert bed contained within a crucible which is to be inserted into a furnace to vaporize the interconnected metal.

FIGURE 4 is a schematic view of a ceramic body immersed in a solvent leachant in order to remove the interconnected metal.

FIGURE 5 is a schematic view of an assembly of a first ceramic body having a second parent metal placed thereon with the assembly retained in an inert bed contained in a refractory vessel.

FIGURES 6-10 are photomicrographs at 400X magnification of cross sections of specimens prepared as described in Examples 1 and 2.

DETAILED DESCRIPTION OF THE INVENTION AND THE PREFERRED EMBODIMENTS

In accordance with the method of this invention, a first self-supporting ceramic body is produced with interconnected porosity. The interconnected porosity is at least partially open or accessible from an external surface (or surfaces), or is rendered accessible by post-process treatment. A significant or substantial amount of the interconnected porosity is filled, infiltrated, or the like, with a second polycrystalline material which becomes integral with the product ceramic structure, thereby modifying, improving or contributing to certain properties of the first ceramic body. Although the invention is described below with particular reference to aluminum as both the first and second parent metals, it should be understood that other parent metals are also applicable, such as silicon, titanium, tin, zirconium, and hafnium.

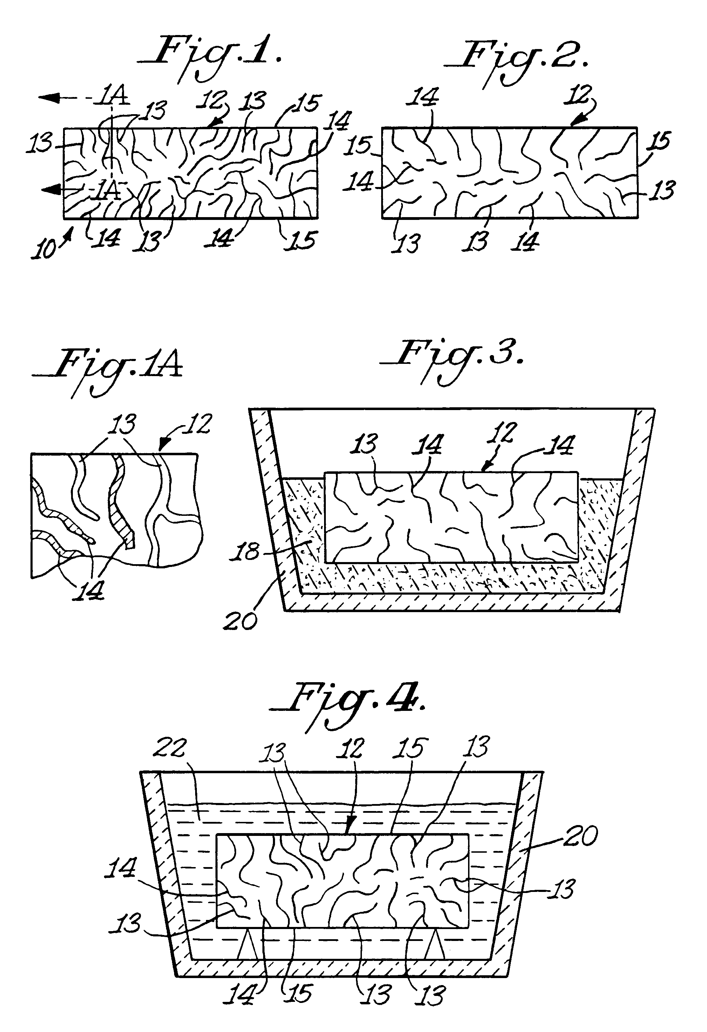

Referring to Figure 1, a self-supporting first polycrystalline ceramic body 12 is first provided, which is made, for example, by the methods of any of the above referred to Commonly Owned Patent Applications. Accordingly, a first parent metal, e.g. aluminum, which may be doped (as explained below in greater detail) is provided as the precursor to the first oxidation reaction product. The first parent metal is melted within an appropriate temperature range in or immediately adjacent to a first oxidizing environment. At this temperature, or within this temperature range, the molten first parent metal reacts with the oxidant to form a first polycrystalline oxidation reaction product. At least a portion of the first oxidation reaction product is maintained in contact with and between the molten first parent metal and the first oxidant to draw molten first parent metal through the first oxidation reaction product and into contact with the first oxidant. In this way, the first oxidation reaction product continues to form at the interface between the first oxidant and previously formed first oxidation reaction product. The reaction is continued for a time sufficient to form the polycrystalline first ceramic body 12 comprising or consisting essentially of the first oxidation reaction product, generally illustrated as 10, having an interconnected porosity 13, and/or an interconnected metallic constituent 14 (Figure 1A). Interconnected metallic constituent 14, below sometimes referred to simply as metal or metal component 14, comprises nonoxidized constituents of the parent metal and may include dopants and other metal inclusions. The interconnected porosity 13, as well as the interconnected metallic constituent 14, are interconnected in one or more dimensions and are dispersed or distributed through part or substantially all of the first polycrystalline material. This porosity 13, and metal 14, formed in situ during formation of the first polycrystalline oxidation reaction product, are both at least partially open or accessible from at least one surface, as at surfaces 15, of the first ceramic body 12, or may be rendered accessible as by machining or fracturing. Some of the porosity 13 and the metal 14 may be isolated as islands. The volume percents of porosity 13 (interconnected and isolated) and metallic constituent 14 (interconnected and isolated) will depend largely on such conditions as temperature, time, dopants, and type of first parent metal employed in making the first ceramic body 12.

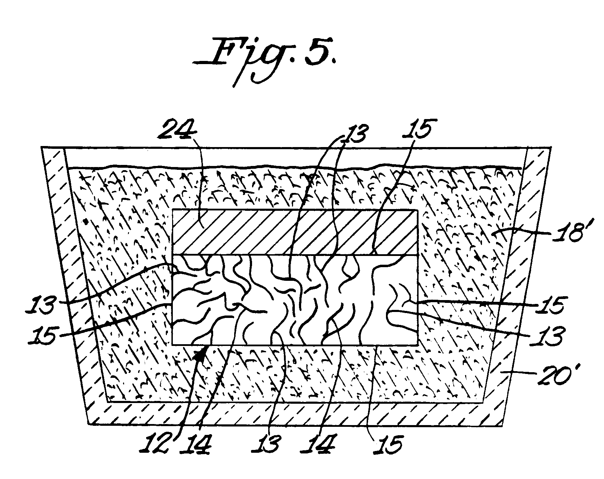

In a preferred embodiment of the invention, essentially or substantially all of the interconnected metal 14 is or should be removed to produce a first self-supporting ceramic body 12 having interconnected porosity 13 distributed through part or substantially all of the polycrystalline material, as illustrated in Figure 2. In order to remove all or a substantial part of the interconnected metal 14, the oxidation reaction process may be taken to completion; that is, when the metal phase has been completely reacted or nearly completely reacted to form oxidation reaction product, the interconnected metal component 14 is drawn from the ceramic body 12, leaving interconnected porosity 13 in its place, and is oxidized to form additional ceramic on its surface(s) 15. If the process is taken to completion, the oxidation reaction product will exhibit a higher volume percent of porosity 13 which is at least partially interconnected. For example, a first ceramic body formed from aluminum processed in air at about 1125°C may contain from about 20 volume percent to about 30 volume percent metal 14, and from about 2 volume percent to about 5 volume percent porosity 13 when growth is stopped before all the first parent metal is oxidized; and if processed to complete the oxidation of all the first parent metal, it may contain from about 1 volume percent to about 3 volume percent metallic constituents 14 and from about 25 volume percent to about 30 volume percent (or higher) voids or pores (porosity) when the process is run to completion.

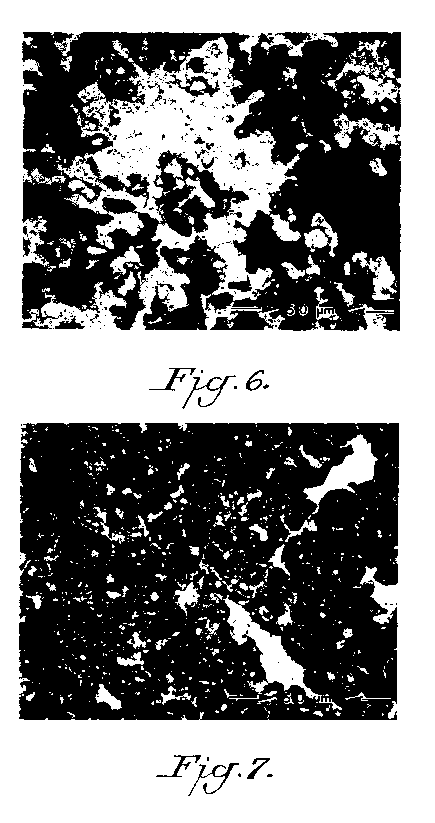

A second method or means of removing interconnected metal 14 is to place the first ceramic body in an inert bed 18 that is contained within a crucible or other refractory container 20 (see Figure 3). The container 20 and its contents are then placed into a furnace having an inert atmosphere (e.g. argon or any other non-reactive gas) and heated to temperatures where the metallic constituent 14 will have a high vapor pressure. This temperature or preferred range can vary depending upon such factors as the composition of the first parent metal, the time of heating and the end composition of the metallic constituent 14 in the first ceramic body. At the suitable temperature, interconnected metal 14 will vaporize from the ceramic body but no additional oxidation reaction product will form because of the inert atmosphere. By maintaining these temperatures, the interconnected metal 14 will continue to vaporize and be carried away from the furnace as by a suitable venting means within the furnace.

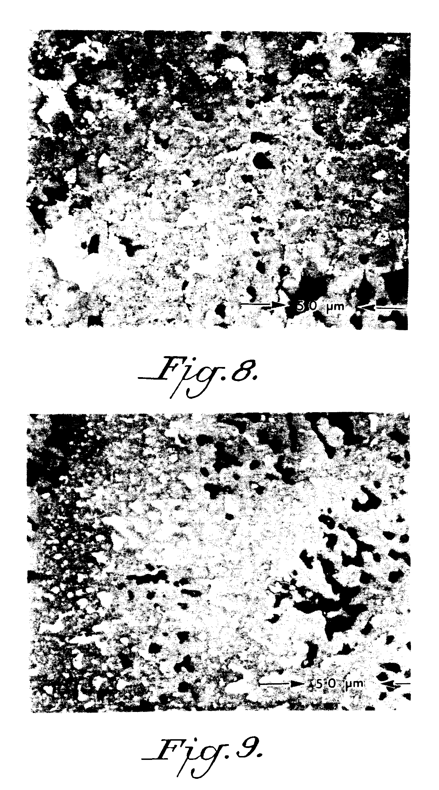

A third method or means of removing interconnected metal 14 is to or immerse the first ceramic body 12 into a suitable leachant 22 to dissolve or disperse out the interconnected metal 14 (see Figure 4). The leachant 22 may be any acidic or caustic liquid or gas, which will depend upon such factors as the composition of metal 14, the time of immersion, etc. In the case of using aluminum as the first parent metal, and therefore having aluminum in the interconnected metal 14, HCl has been found to be a suitable acidic medium. If the ceramic body contains silicon, NaOH and/or KOH solutions are an acceptable caustic medium. The time of immersion of the ceramic body in the leachant 22 will depend upon the amount and type of the metal component 14, and where the interconnected metal 14 is situated with respect to the surface(s) 15. The deeper the interconnected metal 14 is in the first ceramic body 12 the longer it will take such metal 14 to be leached or etched-out, and the longer the ceramic body will have to left in the leachant 22. This extraction step may be facilitated by heating the leachant or by agitating the bath of leachant. After the first ceramic body 12 has been removed from the leachant 22, it should be washed with water to remove any residual leachant.

When essentially or substantially all of the interconnected metal 14 has been removed, a self-supporting first ceramic body 12 is produced which comprises a polycrystalline oxidation reaction product formed upon oxidation of a molten parent metal precursor with an oxidant and having interconnected porosity 13, which preferably comprises from about 5 volume percent to about 45 volume percent of the first ceramic body 12.

A second polycrystalline material is formed from a second parent metal by oxidation thereof with a second, vapor phase oxidant in a process similar or identical to that used to make the first ceramic body, with the second parent metal and first ceramic body oriented with respect to each other so that the forming second polycrystalline material infiltrates at least some of the porosity of the first ceramic body. The infiltration may be limited to a first zone of the first ceramic body or it may be extended through substantially the entire volume of the first ceramic body. Where the infiltration by the second polycrystalline material is limited to a first zone of the first ceramic body, the second, uninfiltrated zone of the first ceramic body will have its porosity substantially unaffected by the infiltration by the second polycrystalline material. The second, uninfiltrated zone may thus have greater porosity than the first, infiltrated zone of the product ceramic structure.

Another technique is to remove metal constituent 14 from only a first zone of the first ceramic body 12, or to remove more useful constituent from the first zone than from the second zone of first ceramic body 12. This may readily be accomplished, for example, by immersing only a part of first ceramic body 12 into the leachant 22 (Figure 4).

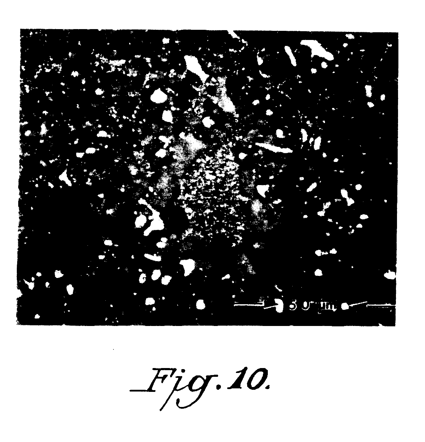

The second polycrystalline material is formed by the techniques disclosed in the Commonly Owned Patent Applications, and one such method is exemplified in Figure 5 in which the first ceramic body 12 is having a high or increased (by post-processing) porosity 13 and a correspondingly reduced metallic constituent 14 is emplaced within an inert bed 13, contained within a refractory container 20'. A body of second parent metal 24 is placed atop first ceramic body 12. Porosity 13 extends to the surface 15 of first ceramic body 12. The assembly shown in Figure 5 is heated to the desired reaction temperature, which is above the melting poing of second parent metal body 24 but below that of both the first oxidation reaction product of first ceramic body 12 and the second oxidation reaction product of second parent metal 24. This assembly is heated in an oxidizing environment, e.g., an air atmosphere, and growth of the second polycrystalline material commences into the porosity 13 of first ceramic body 12. The growth is continued to fill the porosity to a desired extent, e.g., through substantially all of first ceramic body 24 or to a desired extent herein. After the reacting is completed, the assembly is cooled and the resultant ceramic composite structure is separated from the filler 18' and residual second parent metal 24, if any.

The following non-limiting examples are provided to illustrate the method of this invention.

Example 1

Ceramic materials containing interconnected porosity were prepared by the methods of the Commonly Owned Patent Applications. Thus, rectangular ingots each measuring 10.16 cm x 22.86 cm x 3.81 cm (4 inches x 9 inches x 1-1/2 inches) were prepared from aluminum alloy 5052, containing nominally 2.4% magnesium and no more than 0.5% silicon and iron. Each ingot was embedded individually in aluminum oxide particles [Norton El Alundum of 165 $\mu$m (90 mesh) size] in a refractory crucible, and a 10.16 cm x 22.86 cm (4 inch x 9 inch) face of the aluminum ingot was exposed substantially flush with the surface of the bed approximately 6.4 mm (1/4 inch) below the crucible opening. A thin layer of 106 $\mu$m (140 mesh) $SiO_2$ particles was placed on the exposed metal surface as a dopant to promote the reaction.

The crucibles and their contents were placed into a furnace where they were heated in air to the set-point temperature of 1125°C and held there 160 hours. This exposure time was designed to allow the parent Al metal to oxidize as completely as possible, thus creating an alpha-alumina ceramic with interconnected porosity. Cooling of the metal oxidation products occurred evenly over a 10-hour period.

The highly porous nature of the ceramic oxidation product was confirmed by microscopic examination of a polished cross-section as exemplified by Figure 6, an optical micrograph taken at 400X magnification, in which the gray material is alpha-aluminum oxide, the lighter material is either silicon (bright) or aluminum (mottled), and the dark areas are pores. The elemental (silicon or aluminum) content of the body was estimated to be approximately 3% by volume.

Reinfiltration of the resulting formed ceramic material with a grown oxidation reaction product was next demonstrated using two different parent aluminum, alloys. For this purpose, rectangular pieces approximately 5.08 cm x 1.91 cm x 1.27 cm (2 inches x 3/4 inch x 1/2 inch) were cut from the porous ceramic. The cut locations were selected to eliminate any spinel layer present on the original inner surface of the ceramic or any higher density layers on the external surface. These pieces were placed individually on top of rectangular ingots of aluminum alloy nominally measuring 5.08 cm x 2.54 cm x 1.27 cm (2 inches x 1 inch x 1/2 inch) with the 5.08 cm x 1.91 cm (2 x 3/4 inch) ceramic and 5.08 cm x 5.08 cm (2 x 2 inch) metal faces adjacent.

Two different aluminum alloys were used: alloy 712.2 of nominal composition, 5.0-6.5% Zn, 0.5-0.65% Mg, 0.4-0.6% Cr, 0.4% Fe, 0.25% Cu, 0.15-0.25% Ti, 0.15% Si, and 0.1% Mn, and alloy 380.1 of nominal composition, 7.5-9.5% Si, 3.0-4.0% Cu, 2.97% Zn, 1.0% Fe, 0.5% Mn, 0.5% Ni, 0.35% Sn and 0.1% Mg. However the 380.1 alloy actually used in this work was found to contain about 0.17-0.18% Mg. The higher Mg level is believed to be important in view of the established role of Mg as a dopant or promoter of the oxidation reaction.

The ceramic/alloy assemblies described above were placed into separate refractory crucibles and surrounded with a layer of wollastonite particles approximately 1.27 cm (1/2 inch) thick. Wollastonite is used as a barrier material to contain the molten alloy and to confine the oxidation reaction to the void space of the ceramic bodies.

The crucibles and their contents were placed in a furnace and heated in the presence of air to the processing set-point temperature of 900°C within a 5-hour heat-up period. The samples were maintained for 30 hours at the set-point temperature and then cooled to room temperature over a 5-hour period. The cooled ceramic pieces were then removed from the bedding and were observed to show no appreciable change in appearance or geometry.

The ceramic pieces were cross-sectioned, mounted, polished and observed optically for results of the reinfiltration experiment. This examination revealed good reinfiltration into the porous ceramic with both alloys 380.1 and 712.2. Figures 7 and 8 show the reinfiltrated product from alloys 380.1 and 712.2, respectively, 400 times magnification. Note the interconnected ceramic reaction. product replacing the interconnected porosity of the original ceramic (Figure 6). The result is a much more dense body with what appears to be only isolated porosity remaining.

## Example 2

This example illustrates the reinfiltration of ceramic reaction product into a porous ceramic material prepared under different conditions than in Example 1. In this case the porous body was produced by oxidizing an alloy containing, (by weight) 10% silicon, 3% magnesium, balance aluminum, at a reaction set-point temperature of 1250°C for 80 hours. In all other aspects the preparation of initial porous ceramic was identical to that of Example 1. The microstructure of this material is shown in Figure 9 at 400X magnification.

Reinfiltration of ceramic reaction product into the porous ceramic followed the procedure of Example 1 using the 712.2 alloy at 900°C. Figure 10 shows a cross-section, also at 400X magnification, of the resulting material. It was found that infiltration had not been completed during the 30-hour period at 900°C. Figure 10 shows the interface between the infiltrated and unaffected material (toward the top and bottom sides of the Figure, respectively). As in Example 1, the reinfiltrated material is found to have newly grown ceramic oxidation product filling the interconnected porosity of the structure. 1

As explained above, the first ceramic body is produced from a suitable first parent metal according to the processes disclosed in the Commonly Owned Patent Applications. In one preferred embodiment of this invention, a composite is produced by utilizing a mass or bed of permeable filler material placed adjacent to and in contact with a surface of the first parent metal, and the process is continued until the oxidation reaction has infiltrated the bed of filler material to its boundary, which can be defined by a suitable barrier means. The mass of filler, which preferably is shaped as a preform, is sufficiently porous or permeable to allow the oxidant, in the case of a vapor-phase oxidant, to permeate the filler and contact the first parent metal, and to accommodate growth of the first oxidation reaction product within the filler. Alternatively, the first oxidant may be contained within or comprise the filler. The filler may include any suitable material such as particulates, powders, platelets, hollow bodies, spheres, fibers, whiskers, etc., which typically are ceramic materials. Further, the bed of filler may include a lattice of reinforcing rods, plates, or wires. Typically in these polycrystalline ceramic structures, including ceramic composites, the oxidation reaction product crystallites are interconnected and the porosity and/or metallic component are at least partially interconnected and accessible from an external surface of the ceramic body.

As explained in the Commonly Owned Patent Applications, dopant materials used in conjunction with one or both of the first and second parent metals can, in certain cases, favorably influence the oxidation reaction processes, particularly in systems employing aluminum as the parent metal. The function or functions of a dopant material can depend upon a number of factors other than the dopant material itself. Such factors include, for example, the particular combination of dopants when two or more dopants in combination with a dopant alloyed with the parent metal, the concentration of the dopant(s), the oxidizing environment, and the process conditions.

The dopant or dopants used in conjunction with the first and/or second parent metals (1) may be provided as alloying constituents of the parent metal, (2) may be applied to at least a portion of the surface of the parent metal, or, (3) when a filler is utilized, may be applied to or incorporated into part of all of the filler material or preform, or any combination of two or more techniques (1), (2) and (3) may be employed. For example, an alloyed dopant may be used solely or in combination with a second externally applied dopant. In the case of technique (3), where additional dopant or dopants are applied to the filler material, the application may be accomplished in any suitable manner as explained in the Commonly Owned Patent Applications.

Dopants useful for an aluminum parent metal, particularly with air as the oxidant, include magnesium, zinc, and silicon either alone or in combination with each other or in combination with other dopants, as described below. These metals, or a suitable source of the metals, may be alloyed into the aluminum-based parent metal at concentrations for each of between about 0.1-10% by weight based on the total weight of the resulting doped metal. These dopant materials or a suitable source thereof (e.g. MgO, ZnO, or $SiO_2$) may also be used externally to the parent metal. Thus, an alumina ceramic structure is achievable for an aluminum-silicon alloy as the parent metal using air as the oxidant by using MgO as a surface dopant in an amount greater than about 0.0008 gram per gram of parent metal to be oxidized or greater than 0.003 gram per square centimeter or parent metal upon which the MgO is applied.

Additional examples of dopant materials effective with aluminum parent metals oxidized with air include sodium, germanium, tin, lead, lithium, calcium, boron, phosphorus, and yttrium which may be used individually or in combination with one or more other dopants depending on the oxidant and process conditions. Rare earth elements such as cerium, lanthanum, praseodymium, neodymium, and samarium are also useful dopants, and herein again especially when used in combination with other dopants. All of the dopant materials as explained in the Commonly Owned Patent Applications are effective in promoting polycrystalline oxidation reaction product growth for the aluminum-based parent metal systems.

A solid, liquid or vapor-phase (gas) oxidant, or a combination of such oxidants, may be employed with the first parent metal and a vapor-phase oxidant with the second parent metal. For example, typical oxidants include, without limitation, oxygen, nitrogen, a halogen, sulphur, phosphorus, arsenic, carbon, boron, selenium, tellurium, and compounds and combinations thereof, for example, silica (as a source of oxygen), methane, ethane, propane, acetylene, ethylene, and propylene (as a source of carbon), and mixtures such as air, $H_2/H_2O$ and $CO/CO_2$, the latter two (i.e., $H_2/H_2O$ and $CO/CO_2$) being useful in reducing the oxygen activity of the environment.

Although any suitable oxidants may be employed as described above, a vapor-phase oxidant, which is used with the second parent metal, is preferred for use with the first parent metal, however, it should be understood that two or more types of oxidants may be used in combination with the first parent metal. The oxidant employed to oxidize the second parent metal is a vapor-phase oxidant as to which the first ceramic body, or at least the zone thereof which is to be infiltrated by the second polycrystalline material, is permeable or is rendered permeable by the post-processing. The vapor-phase oxidant permeates the first ceramic body or selected zone thereof and therein contacts the second parent metal to oxidize it and forms the second polycrystalline material within the porosity of the first ceramic body. If a vapor-phase oxidant is used in conjunction with the first parent metal and a filler, the filler is permeable to the vapor-phase oxidant so that upon exposure of the bed of filler to the oxidant, the vapor-phase oxidant permeates the bed of filler to contact the molten parent metal therein. The term "vapor-phase oxidant" means a vaporized or normally gaseous material which provides an oxidizing atmosphere. For example, oxygen or gas mixtures containing oxygen (including air) are preferred vapor-phase oxidants when an oxide is desired oxidation reaction product, with air usually being more preferred for obvious reasons of economy. When an oxidant is identified as containing or comprising a particular gas or vapor, this means an oxidant in which the identified gas or vapor is the sole, predominant or at least a significant oxidizer of the parent metal under the conditions in the oxidizing environment utilized. For example, although the major constituent of air is nitrogen, the oxygen content of air is the sole oxidizer for the parent metal because oxygen is a significantly Stronger oxidant than nitrogen. Air, therefore, falls within the definition of an "oxygen-containing gas" oxidant but not within the definition of a "nitrogen-containing gas" oxidant. As example of a "nitrogen-containing gas" oxidant as used herein and in the claims is "forming gas", which contains about 96 volume percent nitrogen and about 4 volume percent hydrogen.

When a solid oxidant is employed in conjunction with the first parent metal and a filler, it is usually dispersed through the entire bed of filler or through that portion of the bed comprising the desired ceramic composite body, in the form of particulates admixed with the filler, or perhaps as coatings on the filler particles. Any suitable solid oxidant may be thus employed including elements, such as boron or carbon, or reducible compounds, such as silicon dioxide or certain borides of lower thermodynamic stability than the boride reaction product of the parent metal. For example, when a boron or a reducible boride is used as a solid oxidant for an aluminum first parent metal, the resulting oxidation reaction product is aluminum boride.

In some instances, the oxidation reaction of the first parent metal may proceed so rapidly with a solid oxidant that the oxidation reaction product tends to fuse due to the exothermic nature of the process. This occurrence can degrade the microstructural uniformity of the ceramic body. This rapid exothermic reaction can be ameliorated by mixing into the composition relatively inert fillers which exhibit low reactivity. An example of such a suitable inert filler is one which is identical to the intended oxidation reaction product.

If a liquid oxidant is employed in conjunction with the first parent metal and a filler, the entire bed of filler, or that portion comprising the desired ceramic body, is impregnated with the oxidant. The filler, for example, may be coated or soaked as by immersion in the oxidant to impregnate the filler. Reference to a liquid oxidant means one which is a liquid under the oxidation reaction conditions and so a liquid oxidant may have a solid precursor, such as a salt, which is molten at the oxidation reaction conditions. Alternatively, the liquid oxidant may be a liquid precursor, e.g., a solution of a material, which is used to impregnate part or all of the filler and which is melted or decomposed at the oxidation reaction conditions to provide a suitable oxidant moiety. Examples of liquid oxidants as herein defined include low melting glasses.

As described in EP-A-245 193 (not prepublished), a barrier means may be used in conjunction with the filler material or preform to inhibit growth or development of the first oxidation reaction product beyond the barrier when vapor-phase oxidants are employed in the formation of the ceramic body. This barrier facilitates the formation of a ceramic body with defined boundaries. Suitable barrier means may be an material, compound, element, composition, or the like, which, under the process conditions of this invention, maintains some integrity, is not volatile, and preferably is permeable to the vapor-phase oxidant while being capable of locally inhibiting, poisoning, stopping, interfering with, preventing, or the like, continued growth of oxidation reaction product. Suitable barriers for use with aluminum parent metal include calcium sulfate (plaster of Paris), calcium silicate, and Portland cement, and mixtures thereof, which typically are applied as a slurry or paste to the surface of the filler material. These barrier means also may include a suitable combustible or volatile material that is eliminated on heating, or a material which decomposes on heating, in order to increase the porosity and permeability of the barrier means. Still further, the barrier means may include a suitable refractory particulate to reduce any possible shrinkage or cracking which otherwise may occur during the process. Such a particulate having substantially the same coefficient of expansion as that of the filler bed or preform is especially desirable. For example, if the preform comprises alumina and the resulting ceramic comprises alumina, the barrier may be admixed with alumina particulate, desirably having a particle size of about 840 $\mu$m - 15 $\mu$m (20-1000 mesh) but may be still finer. Other suitable barriers include refractory ceramics or metal sheaths which are open on at least one end to permit a vapor-phase oxidant to permeate the bed and contact the molten parent metal.

**Claims**

1.  A method of producing a self-supporting ceramic structure comprising the steps of:
    (a) providing a first self-supporting ceramic body comprising (i) a first polycrystalline oxidation reaction product formed upon oxidation of a first molten parent metal with a first oxidant, and (ii) interconnected porosity at least partially accessible from one or more surfaces of said first ceramic body;

(b) orienting a body of second parent metal and said first ceramic body relative to each other so that melting and oxidation reaction of said second parent metal with a second, vapor-phase oxidant will cause formation of a second polycrystalline oxidation reaction product in a direction towards and into said interconnected porosity of said first ceramic body; and

(c) heating said second parent metal to a temperature region above its melting point but below the melting points of both the first and second oxidation reaction products to form a body of molten second parent metal and, within said temperature region,

(i) reacting said body of molten second parent metal with said vapor-phase oxidant to form said second polycrystalline oxidation reaction product material;

(ii) maintaining at least a portion of said second oxidation reaction product in contact with and between said body of molten second parent metal and said second oxidant, whereby said second parent metal is drawn through said second polycrystalline material towards the oxidant so that said second oxidation reaction product continues to form at the interface between the second oxidant and previously formed second oxidation reaction product, and

(iii) continuing said reaction for a time sufficient to infiltrate at least a portion of said porosity of said first ceramic body with said second polycrystalline oxidation reaction product.

2. A method for producing a self-supporting ceramic structure, comprising a polycrystalline material obtained as an oxidation reaction product of at least one parent metal with an oxidant, comprising the steps of (a) heating a first parent metal to form a body of first molten parent metal and reacting said first molten parent metal with a first oxidant at a temperature which is sufficient to form a first oxidation reaction product, and maintaining said first oxidation reaction product in contact with, and extending between, said body of first molten parent metal and said oxidant, (b) maintaining said temperature to progressively draw molten metal through said first oxidation reaction product towards said first oxidant so that the first oxidation reaction product continues to form at the interface between the first oxidant and previously formed first oxidation reaction product and (c) continuing said reaction for a time sufficient to produce a first self-supporting ceramic body comprising a polycrystalline material comprising said first oxidation reaction product and one or both of porosity and one or more metallic constituents, characterized by: (1) providing a selected degree of porosity to the first polycrystalline material, either by suitably controlling the conditions of steps (a) and (b) or by posttreatment; (2) after step (1), orienting a second parent metal and said first polycrystalline material relative to each other so that formation of a second polycrystalline oxidation reaction product will occur in a direction towards and into the porosity of said first polycrystalline material; repeating the process steps of (a), (b), and (c) above on the second parent metal and first polycrystalline material with a second, vapor-phase oxidant to form a second oxidation reaction product; and continuing the repeated reaction for a time sufficient so that said second oxidation reaction product infiltrates at least a portion of said porosity of said first polycrystalline material thereby forming said ceramic structure.

3. The method of claim 1 or claim 2 including infiltrating said porosity of said first ceramic body through a first zone thereof, and leaving a second zone of said first ceramic body free of said second polycrystalline material.

4. The method of claim 1 or claim 2 further comprising embedding a permeable mass of a filler material within said first ceramic body.

5. The method of claim 4 wherein said permeable mass of filler comprises a preform of predetermined shape, and said infiltration into said preform produces said first ceramic body as a ceramic composite body having the configuration of said preform.

6. The method of claim 1 or claim 2 wherein said oxidant used in oxidizing said first parent metal is a different oxidant from that used in oxidizing said second parent metal.

7. The method of claim 1 wherein the first and second parent metals are selected from the group consisting of aluminum, silicon, titanium, tin, zirconium, and hafnium.

8. The method of claim 1 or claim 2 wherein said first parent metal and said second parent metal each comprise an aluminum parent metal.

9. The method of claim 1 or claim 2 wherein said second oxidant comprises air.

**10.** The method of claim 1 or claim 2 wherein said first oxidant and said second oxidant both comprise air.

**11.** The method of claim 1 or claim 2 including utilizing a dopant material in conjunction with one or both of said first parent metal and said second parent metal.

**12.** The method of claim 1 or claim 2 wherein both the first and second parent metals comprise aluminum metal and both the first and second polycrystalline oxidation reaction products comprise primarily alumina.

**13.** The method of claim 1 or claim 2 wherein the porosity of the first ceramic body is between about 5 to 45 percent by volume of the first ceramic body before infiltration of the porosity in the first ceramic body by said second polycrystalline material.

**14.** The method of claim 1 or claim 2 wherein said first ceramic body includes one or more interconnected metallic constituents which are at least partially accessible from one or more surfaces of said first ceramic body, and wherein said first ceramic body is immersed into a leachant prior to infiltration of its porosity by said second polycrystalline material in order to at least partially dissolve said interconnected metallic constituents out of said first ceramic body.

**15.** The method of claim 1 or claim 2 wherein said first parent metal and said second parent metal are substantially identical in composition.

**16.** The method of claim 1 or claim 2 wherein said first parent metal and said second parent metal differ in composition from each other.

**17.** The method of claim 1 or claim 2, wherein said first ceramic body includes at least one interconnected metallic constituent which is at least partially accessible from at least one surface of said first ceramic body, and wherein said first ceramic body is subjected to an elevated temperature in an inert atmosphere to result in said at least one metallic constituent having a high vapor pressure and therefore being removed from the first ceramic body prior to infiltration of the porosity in the first ceramic body by said second oxidation reaction product.

**18.** A self-supporting ceramic body comprising a first polycrystalline oxidation reaction product with interconnected porosity a substantial amount of which is filled with a second ingrown polycrystalline oxidation reaction product, as it is obtained by a method as claimed in any of the foregoing claims 1 to 17.

**Revendications**

**1.** Procédé de production d'une structure céramique autoportante, qui comprend les étapes consistant :

(a) à prendre un premier corps céramique autoportant comprenant (i) un premier produit réactionnel d'oxydation polycristallin formé par oxydation d'un premier métal-mère fondu avec un premier oxydant et (ii) des pores interconnectés au moins partiellement accessibles depuis une ou plusieurs surfaces dudit premier corps céramique ;

(b) à orienter un corps de second métal-mère et dudit premier corps céramique l'un par rapport à l'autre de manière que la fusion et la réaction d'oxydation dudit second métal-mère avec un second oxydant en phase vapeur entraîne la formation d'un second produit réactionnel d'oxydation polycristallin en direction et à l'intérieur des pores interconnectés du premier corps céramique ; et

(c) à chauffer le second métal-mère dans une région de température au-dessus de son point de fusion, mais au-dessous des points de fusion des premier et second produits réactionnels d'oxydation pour former un corps de second métal-mère fondu et, dans ladite région de température,

(i) à faire réagir le corps de second métalmère fondu avec l'oxydant en phase vapeur pour former le second produit réactionnel d'oxydation polycristallin ;

(ii) à maintenir au moins une portion du second produit réactionnel d'oxydation au contact dudit corps de second métal-mère fondu et du second oxydant et entre eux, de manière que le second métal-mère soit attiré à travers la seconde matière polycristalline en direction de l'oxydant afin que le second produit réactionnel d'oxydation continue de se former à l'interface entre le second oxydant et le second produit réactionnel d'oxydation précédemment formé, et

(iii) à poursuivre ladite réaction pendant une durée suffisante pour que le second produit réactionnel d'oxydation polycristallin s'infiltre dans au moins une portion des pores du premier corps céramique.

2. Procédé de production d'une structure céramique autoportante, comprenant une matière polycristalline obtenue comme produit réactionnel d'oxydation d'au moins un métal-mère avec un oxydant, qui comprend les étapes consistant (a) à chauffer un premier métal-mère pour former un corps de ce premier métal-mère fondu et à faire réagir ce premier métal-mère fondu avec un premier oxydant à une température qui est suffisante pour former un premier produit réactionnel d'oxydation, et à maintenir ledit premier produit réactionnel d'oxydation en contact avec et entre le corps de premier métal-mère fondu et ledit oxydant, (b) à maintenir ladite température pour attirer progressivement du métal fondu à travers le premier produit réactionnel d'oxydation en direction du premier oxydant de manière que le premier produit réactionnel d'oxydation continue de se former à l'interface entre le premier oxydant et le premier produit réactionnel d'oxydation précédemment formé et (c) à poursuivre ladite réaction pendant une durée suffisante pour former un premier corps céramique autoportant comprenant une matière polycristalline formée du premier produit réactionnel d'oxydation et ou bien des pores, ou bien d'un ou plusieurs constituants métalliques, ou bien des deux, caractérisé en ce qu'il consiste : (1) à conférer un degré choisi de porosité à la première matière polycristalline, par un réglage convenable des conditions des étapes (a) et (b) ou par un post-traitement ; (2) après l'étape (1), à orienter un second métal-mère et la première matière polycristalline l'un par rapport à l'autre de manière que la formation d'un second produit réactionnel d'oxydation polycristallin ait lieu dans la direction de la première matière polycristalline et dans la porosité de cette matière ; à répéter les étapes précédentes (a), (b) et (c) du procédé sur le second métal-mère et la première matière polycristalline avec un second oxydant en phase vapeur pour former un second produit réactionnel d'oxydation ; et à poursuivre la réaction répétée pendant une durée suffisante pour que le second produit réactionnel d'oxydation s'infiltre dans au moins une portion des pores de la première matière polycristalline pour former ainsi ladite structure céramique.

3. Procédé suivant la revendication 1 ou la revendication 2, comprenant l'imprégnation desdits pores dudit premier corps céramique à travers une première zone de ce corps, en laissant une seconde zone du premier corps céramique dépourvue de la seconde matière polycristalline.

4. Procédé suivant la revendication 1 ou la revendication 2, consistant en outre à noyer une masse perméable d'une charge dans ledit premier corps céramique.

5. Procédé suivant la revendication 4, dans lequel la masse perméable de charge comprend une préforme de configuration prédéterminée, et ladite infiltration dans ladite préforme engendre le premier corps céramique comme un corps composite céramique ayant la configuration de ladite préforme.

6. Procédé suivant la revendication 1 ou la revendication 2, dans lequel l'oxydant utilisé pour oxyder le premier métal-mère est un oxydant différent de celui qui est utilisé dans l'oxydation du second métal-mère.

7. Procédé suivant la revendication 1, dans lequel les premier et second métaux-mères sont choisis dans le groupe comprenant l'aluminium, le silicium, le titane, l'étain, le zirconium et le hafnium.

8. Procédé suivant la revendication 1 ou la revendication 2, dans lequel le premier métal-mère et le second métal-mère comprennent chacun un métal-mère formé d'aluminium.

9. Procédé suivant la revendication 1 ou la revendication 2, dans lequel le second oxydant comprend de l'air.

10. Procédé suivant la revendication 1 ou la revendication 2, dans lequel le premier oxydant et le second oxydant comprennent tous deux de l'air.

11. Procédé suivant la revendication 1 ou la revendication 2, comportant l'utilisation d'une matière dopante conjointement avec ou bien le premier métal-mère, ou bien le second métal-mère, ou bien les deux.

12. Procédé suivant la revendication 1 ou la revendication 2, dans lequel les premier et second métaux-mères comprennent tous deux de l'aluminium métallique et les premier et second produits réactionnels d'oxydation polycristallins comprennent tous deux principalement de l'alumine.

13. Procédé suivant la revendication 1 ou la revendication 2, dans lequel les pores du premier corps céramique représentent environ 5 à 45 % en volume du premier corps céramique avant l'infiltration de la seconde matière polycristalline dans les pores du premier corps céramique.

14. Procédé suivant la revendication 1 ou la revendication 2, dans lequel le premier corps céramique comprend un ou plusieurs constituants métalliques interconnectés qui sont au moins partiellement accessibles depuis une ou plusieurs surfaces du premier corps céramique, et le premier corps céramique est immergé dans un agent de lixiviation avant l'imprégnation de ses pores par la seconde matière polycristalline de manière à enlever au moins partiellement du premier corps céramique par dissolution lesdits constituants métalliques interconnectés.

15. Procédé suivant la revendication 1 ou la revendication 2, dans lequel le premier métal-mère et le second métal-mère sont de composition pratiquement identique.

16. Procédé suivant la revendication 1 ou la revendication 2, dans lequel le premier métal-mère et le second métal-mère diffèrent l'un de l'autre quant à leur composition.

17. Procédé suivant la revendication 1 ou la revendication 2, dans lequel le premier corps céramique renferme au moins un constituant métallique interconnecté qui est au moins partiellement accessible depuis au moins une surface du premier corps céramique, et le premier corps céramique est exposé à une température élevée dans une atmosphère inerte, ce qui a pour effet que ce constituant métallique a une haute pression de vapeur et est donc éliminé du premier corps céramique avant l'imprégnation des pores du premier corps céramique par le second produit réactionnel d'oxydation.

18. Corps céramique autoportant, comprenant un premier produit réactionnel d'oxydation polycristallin à pores interconnectés, dont une proportion notable est remplie d'un second produit réactionnel d'oxydation polycristallin développé en dedans, tel qu'obtenu par un procédé suivant l'une quelconque des revendications 1 à 17 précédentes.

**Patentansprüche**

1. Verfahren zur Herstellung einer selbsttragenden keamischen Struktur mit den Schritten

(a) Bereitstellen eines ersten selbsttragenden keramischen Körpers mit (i) einem ersten polykristallinen Oxidationsreaktionsprodukt, das durch Oxidation eines ersten schmelzflüssigen Grundmetalls mit einem ersten Oxidationsmittel gebildet wurde, und (ii) in sich verbundener Porosität, die wenigstens teilweise von einer oder mehreren Oberflächen des genannten ersten keramischen Körpers zugänglich ist;

(b) Orientieren eines Körpers eines zweiten Grundmetalls und des genannten ersten keramischen Körpers so zueinander, daß ein Schmelzen und eine Oxidationsreaktion des genannten zweiten Grundmetalls mit einem zweiten Dampfphasenoxidationsmittel die Bildung eines zweiten polykristallinen Oxidationsreaktionsprodukts in eine Richtung auf die genannte in sich verbundene Porosität des genannten ersten keramischen Körpers zu und in diese hinein bewirkt; und

(c) Erhitzen des genannten zweiten Grundmetalls auf einen Temperaturbereich oberhalb seines Schmelzpunkts jedoch unterhalb der Schmelzpunkte sowohl des ersten als auch des zweiten Reaktionsprodukts, um einen Körper aus dem schmelzflüssigen zweiten Grundmetall zu bilden, und, innerhalb des genannten Temperaturbereichs,

(i) Umsetzen des genannten Körpers aus schmelzflüssigem zweiten Grundmetall mit dem genannten Dampfphasenoxidationsmittel, um das genannte zweite polykristalline Oxidationsreaktionsproduktmaterial zu bilden;

(ii) Halten wenigstens eines Teils des genannten zweiten Oxidationsreaktionsprodukts in Kontakt mit und zwischen dem genannten Körper aus schmelzflüssigem zweiten Grundmetall und dem genannten zweiten Oxidationsmittel, wodurch das genannte zweite Grundmetall durch das genannte zweite polykristalline Material auf das Oxidationsmittel zu gesaugt wird, so daß sich das genannte zweite Oxidationsreaktionsprodukt fortgesetzt an der Grenzfläche zwischen dem zweiten Oxidationsmittel und vorher gebildetem zweite Oxidationsreaktionsprodukt bildet, und

(iii) Fortsetzen der genannten Umsetzung für eine Zeit, die ausreicht, um wenigstens einen Teil der genannten Porositäten des genannten ersten keramischen Körpers mit dem genannten zweiten polykristallinen Oxidationsreaktionsprodukt zu infiltrieren.

2. Verfahren zur Herstellung einer selbsttragenden keramischen Struktur, die ein polykristallines Material aufweist, das als ein Oxidationsreaktionsprodukt von wenigstens einem Grundmetall mit einem Oxidationsmittel erhalten wurde, das die Stufen aufweist (a) Erhitzen eines ersten Grundmetalls unter Bildung eines Körpers aus einem ersten schmelzflüssigen Grundmetall und Umsetzen des genannten ersten schmelzflüssigen Grundmetalls mit einem ersten Oxidationsmittel bei einer Temperatur, die ausreicht, um ein erstes Oxidationsreaktionsprodukt zu bilden, und Halten des genannten ersten Oxidationsreaktionsprodukts in Kontakt mit und zwischen dem genannten Körper aus dem ersten schmelzflüssigen Grundmetall und dem genannten Oxidationsmittel, (b) Aufrechterhalten der genannten Temperatur, um fortschreitend schmelzflüssiges Metall durch das genannte erste Oxidationsreaktionsprodukt zu dem ersten Oxidationsmittel zu saugen, so daß das erste Oxidationsreaktionsprodukt sich fortgesetzt an der Grenzfläche zwischen dem ersten Oxidationsmittel und vorher gebildetem ersten Oxidationsreaktionsprodukt bildet, und (c) Fortsetzen der genannten Umsetzung für eine Zeit, die ausreicht, einen ersten selbsttragenden keramischen Körper zu erzeugen, der ein polykristallines Material aufweist, das das genannte erste Oxidationsreaktionsprodukt sowie Porosität und/oder einen oder mehrere metallische Bestandteile enthält, gekennzeichnet durch (1) Erzeugen eines ausgewählten Porositätsgrads bei dem ersten polykristallinen Material, indem man entweder die Bedingungen der Stufen (a) und (b) in geeigneter Weise steuert oder durch eine Nachbehandlung; (2) dadurch, daß man nach Stufe (1) ein zweites Grundmetall und das genannte erste polykristalline Material so relativ zueinander anordnet, daß die Bildung eines zweiten polykristallinen Oxidationsreaktionsprodukts in eine Richtung auf die Porosität des genannten ersten polykristallinen Materials zu und in diese hinein erfolgt, Wiederholen der obigen Verfahrensstufen (a), (b) und (c) mit dem zweiten Grundmetall und dem ersten polykristallinen Material mit einem zweiten Dampfphasenoxidationsmittel, um ein zweites Oxidationsreaktionsprodukt zu bilden, und Fortsetzen der wiederholten Reaktion für eine solche Zeit, die ausreicht, daß das genannte zweite Oxidationsreaktionsprodukt wenigstens einen Teil der genannten Porosität des genannten ersten polykristallinen Materials infiltriert, wodurch die genannte keramische Struktur gebildet wird.

3. Verfahren nach Anspruch 1 oder Anspruch 2, das die Infiltrierung der genannten Porosität des genannten ersten keramischen Körpers in einer ersten Zone davon umfaßt, während man eine zweite Zone des genannten ersten keramischen Körpers von dem genannten zweiten polykristallinen Material freihält.

4. Verfahren nach Anspruch 1 oder 2, das außerdem das Einbetten einer permeablen Füllstoffmasse innerhalb des ersten keramischen Körpers umfaßt.

5. Verfahren nach Anspruch 4, bei dem die genannte permeable Füllstoffmasse eine Vorform einer vorgegebenen Form umfaßt und bei dem die Infiltration in die genannte Vorform den genannten ersten keramischen Körper als einen keramischen Verbundkörper mit der Konfiguration der genannten Vorform erzeugt.

6. Verfahren nach Anspruch 1 oder Anspruch 2, bei dem das genannte Oxidationsmittel, das zum Oxidieren des genannten ersten Grundmetalls verwendet wird, sich von dem Oxidationsmittel unterscheidet, das zum Oxidieren des genannten zweiten Grundmetalls verwendet wird.

7. Verfahren nach Anspruch 1, bei dem das erste und das zweite Grundmetall ausgewählt sind aus der Gruppe, die aus Aluminium, Silicium, Titan, Zinn, Zirkonium und Hafnium besteht.

8. Verfahren nach Anspruch 1 oder Anspruch 2, bei dem das genannte erste Grundmetall und das genannte zweite Grundmetall jeweils ein Aluminiumgrundmetall umfaßt.

9. Verfahren nach Anspruch 1 oder Anspruch 2, bei dem das genannte zweite Oxidationsmittel Luft umfaßt.

10. Verfahren nach Anspruch 1 oder Anspruch 2, bei dem das genannte erste Oxidationsmittel und das genannte zweite Oxidationsmittel beide Luft umfassen.

11. Verfahren nach Anspruch 1 oder Anspruch 2, das die Verwendung eines Dotierungsmaterials in Verbindung mit einem oder beiden der genannten ersten und zweiten Grundmetalle einschließt.

12. Verfahren nach Anspruch 1 oder Anspruch 2, bei dem sowohl das erste als auch das zweite Grundmetall Aluminiummetall umfassen und sowohl das erste als auch das zweite polykristalline Oxidationsreaktionsprodukt primär Aluminiumoxid umfassen.

13. Verfahren nach Anspruch 1 oder Anspruch 2, bei dem die Porosität des ersten keramischen Körpers zwischen etwa 5 bis 45 Volumenprozent des ersten keramischen Körpers beträgt, bevor die Infiltration der Porosität in dem ersten keramischen Körper durch das zweite polykristalline Material erfolgt.

14. Verfahren nach Anspruch 1 oder Anspruch 2, bei dem der genannte erste keramische Körper einen oder mehrere in sich verbundene metallische Bestandteile enthält, die wenigstens teilweise von einer oder mehreren Oberflächen des genannten ersten keramischen Körpers zugänglich sind, und bei dem der genannte erste keramische Körper in ein Auslaugmittel eingetaucht wird, bevor seine Porosität durch das genannte zweite polykristalline Material infiltriert wird, um wenigstens teilweise die genannten in sich verbundenen metallischen Bestandteile aus dem genannten ersten keramischen Körper herauszulösen.

15. Verfahren nach Anspruch 1 oder Anspruch 2, bei dem das genannte erste Grundmetall und das genannte zweite Grundmetall eine im wesentlichen identische Zusammensetzung aufweisen.

16. Verfahren nach Anspruch 1 oder Anspruch 2, bei dem das genannte erste Grundmetall und das genannte zweite Grundmetall sich in ihrer Zusammensetzung voneinander unterscheiden.

17. Verfahren nach Anspruch 1 oder Anspruch 2, bei dem der genannte erste keramische Körper wenigstens einen in sich verbundenen metallischen Bestandteil enthält, der wenigstens teilweise von wenigstens einer Oberfläche des genannten ersten keramischen Körpers zugänglich ist, und bei dem der genannte erste keramische Körper in einer Inertatmosphäre einer erhöhten Temperatur ausgesetzt wird, was dazu führt, daß der genannte wenigstens eine metallische Bestandteil einen hohen Dampfdruck hat und deshalb aus dem ersten keramischen Körper entfernt wird, bevor die Infiltration der Porosität in dem ersten keramischen Körper durch das zweite Oxidationsreaktionsprodukt erfolgt.

18. Ein selbsttragender keramischer Körper mit einem ersten polykristallinen Oxidationsreaktionsprodukt mit einer in sich verbundenen Porosität, von der eine wesentliche Menge mit einem zweiten eingewachsenen polykristallinen Oxidationsreaktionsprodukt gefüllt ist, wie er nach einem Verfahren, wie es in irgendeinem der Ansprüche 1 bis 17 beansprucht wird, erhalten wird.

# Fig.1.

# Fig.2.

# Fig.1A

# Fig.3.

# Fig.4.

Fig. 5.

_Fig.6._

_Fig.7._

_Fig.8._

_Fig.9._

_Fig.10._